# EUROPEAN PATENT APPLICATION

(11) **EP 1 276 274 A2**
(43) Date of publication of application: **15.01.2003**
(21) Application number: 01308895.0
(22) Date of filing: 19.10.2001
(51) Int. Cl.: H04L 12/24

(54) **Control of cooperative operation among plural devices interconnected via a network**

(30) Priority: 09.07.2001 JP 2001207447
(71) Applicant: FUJITSU LIMITED, Kawasaki-shi, Kanagawa 211-8588 (JP)
(72) Inventor: Sakamoto, Takuya, c/o Fujitsu Limited, Kawasaki-shi, Kanagawa, 211-8588 (JP); Sonoda, Toshihiro, c/o Fujitsu Limited, Kawasaki-shi, Kanagawa, 211-8588 (JP); Nishiguchi, Naoki, c/o Fujitsu Limited, Kawasaki-shi, Kanagawa, 211-8588 (JP)
(74) Representative: Stebbing, Timothy Charles

(57) **Abstract**

The invention allows easier determination of a cooperative operation for devices connected to a LAN (50). A control unit (11) in an information processing device (10) connected to the LAN provides to a display, in accordance with selection of devices (10, 20, 30, 40) by a user, data representative of cooperative operations executable by using the selected devices. The control unit provides, to the display, data representative of cooperative operations executed in the past and recorded in a memory (12). The control unit provides to the selected devices, via the LAN, a necessary command to execute one of the executable cooperative operations that is selected by the user. The control unit provides, to the display, data representative of a device which is connected to the LAN and substitutable for a necessary device.

## Description

The present invention relates to controlling of a cooperative operation among a plurality of devices interconnected via a local area network.

A plurality of digital audio and visual (AV) devices and components can be interconnected via a serial bus in compliance with the IEEE 1394 Standard or a daisy-chain bus. In accordance with the IEEE 1394 Standard, each device stores a unique ID, including a manufacturer ID and a serial production number, in its specific memory area. The devices can exchange their unique IDs with each other. The AV/C Command Standard is frequently used for controlling the devices via the IEEE 1394 Standard serial bus. In accordance with the AV/C Command Standard, each device can communicate with the other devices to detect the device types of the other devices.

In Japanese Unexamined Patent Publication No. 2001-8146 A laid open for public inspection on January 12, 2001, entitled "Electronic Device, and Recording and Reproducing Method", Masahiko Nozoe et al. disclose a method for obtaining unique IDs to indicate a list of devices connected to a serial bus on a display, and allowing a user to select ones of the devices and a function for use from the list to cause the selected devices to operate cooperatively. However, it is annoying for the user to select all necessary devices from the plurality of devices and also select a particular cooperative operation function each time the user makes use of the cooperative operation function. When a device necessary for the cooperative operation is not available, for example, when such a device is not connected to the serial bus, the user may not know the way of operation.

The present inventors have recognized the need for allowing a user to more easily make use of a cooperative operation function of a plurality of devices connected to a local area network.

An embodiment of the present invention can automatically indicate a device required to be connected to a LAN in order to execute a particular cooperative operation function.

In accordance with an aspect of the invention, an information processing device connected to a LAN has a control unit, which generates, in accordance with selection of one or more devices by a user, data representative of one or more cooperative operations executable by using the selected one or more devices. The control unit provides to the one or more selected devices, via the LAN, a necessary command to execute one of the one or more executable cooperative operations that is selected by the user.

In accordance with another aspect of the invention, an information processing device connected to a LAN has a control unit, which generates data representative of one or more cooperative operations executed in the past and recorded in a memory. The control unit provides a necessary command to execute one of the one or more cooperative operations that is selected by a user, to one or more devices associated with the selected cooperative operation via the LAN.

In accordance with a still further aspect of the invention, an information processing device connected to a LAN has a control unit, which generates data representative of one or more cooperative operations. When a device necessary for executing one of the one or more cooperative operations selected by a user is not connected to the LAN, the control unit produces data representative of another device which is connected to the LAN and substitutable for the necessary device.

In another aspect, a program (which may be stored on a recording medium) for use in an information processing device connected to a LAN comprises the step of generating, in accordance with selection of one or more devices by a user, data representative of one or more cooperative operations executable by using the selected one or more device; and the step of providing to the one or more selected devices, via the LAN, a necessary command to execute one of the one or more executable cooperative operations that is selected by the user.

In a further aspect, a program (which may be stored on a recording medium) for use in an information processing device connected to a LAN comprises the step of generating data representative of one or more cooperative operations executed in the past and recorded in a memory; and the step of providing a necessary command to execute one of the one or more cooperative operations that is selected by a user, to one or more devices associated with the selected cooperative operation via the LAN.

In a still further aspect, a program (which may be stored on a recording medium) for use in an information processing device connected to a LAN comprises the step of generating data representative of one or more cooperative operations; and the step of producing data representative of a device which is connected to the LAN and substitutable for a device necessary for executing one of the one or more cooperative operations that is selected by a user, when the necessary device is not connected to the LAN.

According to the invention, the user can more easily make use of a cooperative operation function for the plurality of the devices connected to the LAN. A device required to be connected to the LAN for executing a particular cooperative operation function can be indicated to the user. In the drawings:
FIGURE 1 shows a schematic configuration of a plurality of electronic devices interconnected via a local area network in accordance with the present invention;
FIGURE 2 shows a configuration of a plurality of devices interconnected via a serial bus in accordance with an embodiment of the invention;
FIGURE 3 illustrates a first display screen shown on a display of a home server, in accordance with the embodiment, for allowing selection of one or more of the plurality of devices shown in FIGURE 2 and an associated cooperative operation;
FIGURES 4A and 4B show a flow chart for enabling a cooperative operation that is performed by a control unit of the home server in accordance with the embodiment;
FIGURES 5A and 5B illustrate screens for executing a cooperative operation;
FIGURES 6A and 6B show a flow chart that can be incorporated into the flow chart of FIGURES 4A and 4B;
FIGURE 7 illustrates another screen for executing the cooperative operation when a necessary device is not connected to the serial bus;
FIGURE 8 illustrates a screen for renewing tables;
FIGURE 9 shows an example of a table of cooperative operations and associated devices; and
FIGURE 10 shows an example of a table of cooperative operations and associated functions of the devices for the cooperative operations.

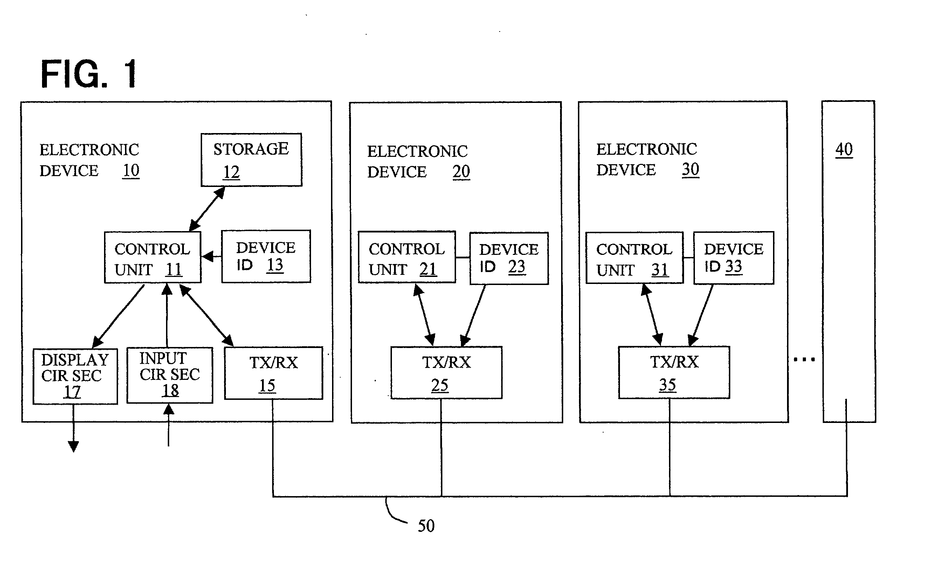

FIGURE 1 shows a schematic configuration of a plurality of electronic devices 10, 20, 30, ... and 40 interconnected via a local area network (LAN) 50 in accordance with the present invention. The electronic device 10 is a home server for example. The electronic devices 20, 30, ... and 40 are, for example, a digital television set (DTV), a tuner, a CD player, a digital video cassette recorder (DVCR), and the like. The electronic devices 10, 20, 30, ... and 40 transmit and receive content data, control signals, status signals and the like via their respective transceiver units 15, 25, 35, ... under the control of their respective control units 11, 21, 31.... The electronic devices 10, 20, 30, ... and 40 hold their unique IDs (device identification codes) in their respective memory areas 13, 23, 33, .... The electronic device 10 monitors and controls the other electronic devices 20, 30, ... and 40 via the LAN 50, receives content data from either one of the other electronic devices 20, 30, ... and 40 to store the content data in its storage device 12, and sends the content data stored in the storage device 12 to either one of the other electronic devices 20, 30, ... and 40. The electronic device 10 further includes a display circuit section 17 coupled to a display, a speaker and the like, and an input circuit section 18 coupled to a keyboard, a mouse and the like.

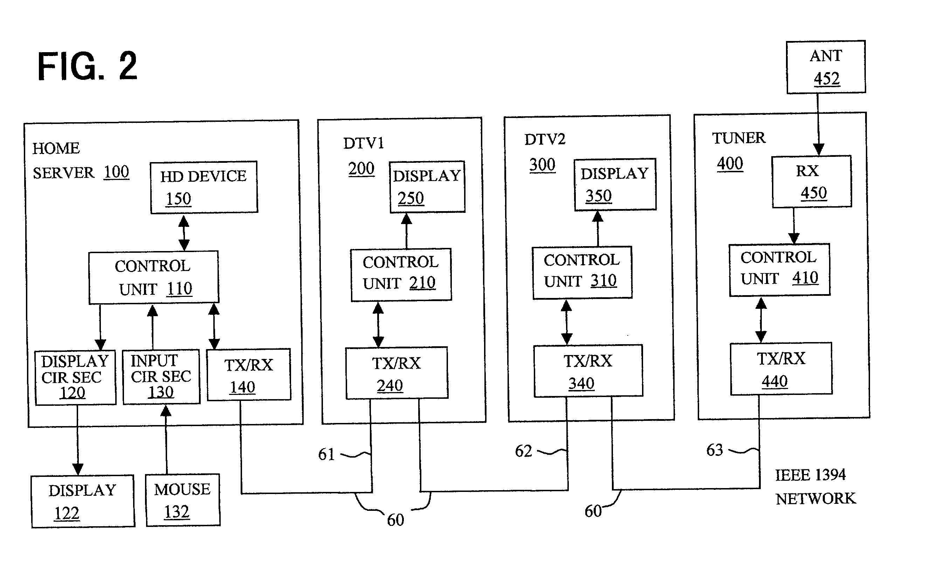

FIGURE 2 shows a configuration of a plurality of devices, a home server 100, a digital television set 200, a digital television set 300 and a tuner 400, which are interconnected via an IEEE 1394 serial bus 60 in accordance with an embodiment of the present invention.

The home server 100 includes a control unit 110, a display circuit section 120, an input circuit section 130, a transceiver unit 140 and a hard disk storage device 150. The display circuit section 120 is coupled to a display 122 and a speaker (not shown). A mouse 132 and a keyboard (not shown) are coupled to the input circuit section 130. The control unit 110 may be a dedicated or general-purpose microcontroller or microprocessor. The control unit 110 may operate in accordance with programs stored in the storage device 150.

The digital television set 1 (DTV1) 200 includes a control unit 210, a transceiver unit 240 and a display device 250. The digital television set 2 (DTV2) 300 includes a control unit 310, a transceiver unit 340 and a display device 350 including a CRT or LCD. The tuner 400 includes a control unit 410, a transceiver unit 440 and an RF signal receiver unit 450. The RF signal receiver unit 450 is coupled to an antenna 452, such as an antenna dish. The control units 210, 310 and 410 may be microcontrollers or microprocessors, each including a CPU, a RAM and a ROM.

The transceiver unit 140 of the home server 100 is coupled to the transceiver unit 240 of the digital television set 200 via a serial bus 61. The transceiver unit 240 of the digital television set 200 is coupled to the transceiver unit 340 of the digital television set 300 via a serial bus 62. The transceiver unit 340 of the digital television set 300 is coupled to the transceiver unit 440 of the tuner 400 via a serial bus 63.

Each of the home server 100, the television set 200, the television set 300 and the tuner 400 can communicate with the other devices to obtain the device type identifications of the other devices by means of their unique IDs, in accordance with the AV/C Command Standard in the IEEE 1394 Standard. The home server 100 obtains the unique IDs of the other devices 200 to 400 and controls the devices to operate cooperatively or in harmony via a control signal. History data related to the cooperative operation functions executed in the past by a user is stored in the storage device 150.

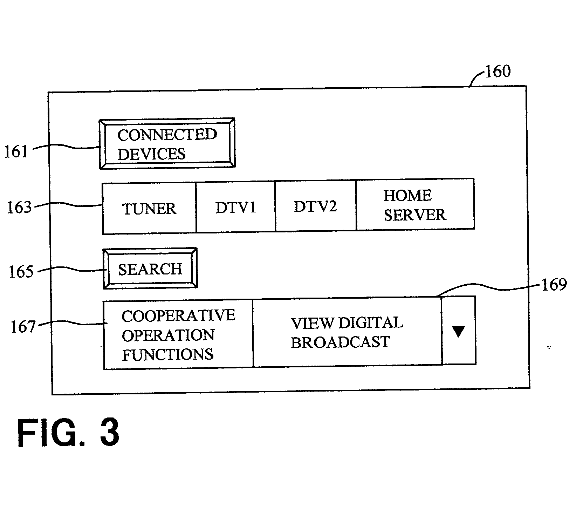

FIGURE 3 illustrates a first display screen 160 displayed on the display 122 of the home server 100, in accordance with the embodiment, for allowing selection of one or more of the plurality of devices shown in FIGURE 2 and an associated cooperative operation function.

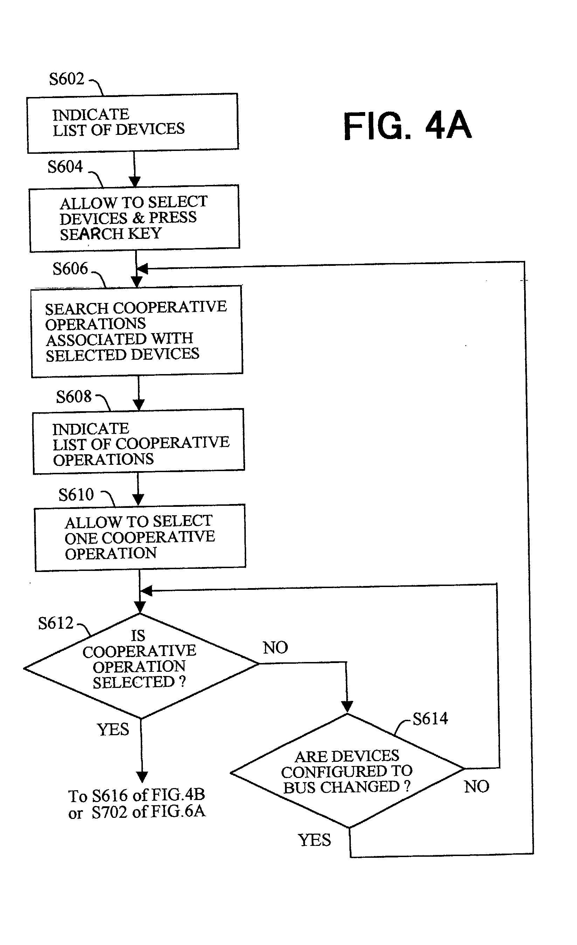

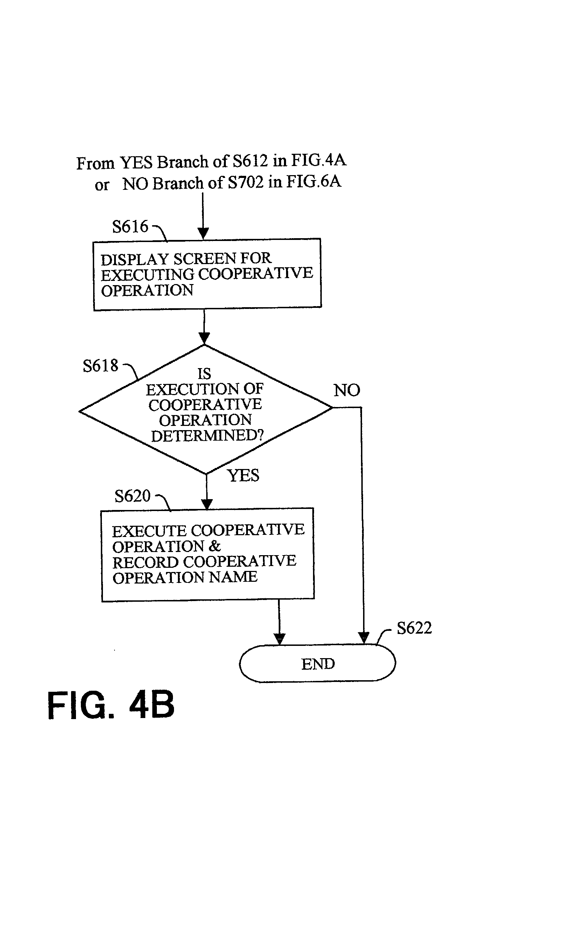

FIGURES 4A and 4B show a flow chart for enabling a cooperative operation function performed by the control unit 110 of the home server 100.

At Step 602, the screen 160 as shown in FIGURE 3 is displayed on the display 122. When the user presses a software key "CONNECTED DEVICES" 161 by clicking the mouse 132 on the software key on the screen 160 of the display 122, the control unit 110 indicates, below the key, a list 163 of devices coupled to the serial bus 60. The device list 163 includes the names and/or numbers, i.e. "TUNER", "DTV1", "DTV2" and "HOME SERVER", of the devices connected to the serial bus 60 in accordance with the connections shown in FIGURE 1. The unique IDs of the devices 200 to 400 are converted into their respective names and numbers stored beforehand in the hard disk storage device 150 of the home server 100 and then indicated, in order to make the user perceive the connected devices easily. The names and numbers may be determined by the user. The control unit 110 of the home server 100 detects when a device is connected to or disconnected from the serial bus 60, and identifies the devices currently connected to the serial bus 60. The connection and disconnection of a device to and from the serial bus 60 are detected by the control unit of that device and the control units of the other devices in accordance with the bus reset defined in the IEEE 1394 Standard, to notify the control units of the other devices and the home server via the serial bus 60.

At Step 604, the user is allowed to select one or more devices from the device list 163 on the screen 160 of FIGURE 3, and press a key "SEARCH" 165. At Step 606, the control unit 110 searches a specific table of cooperative operation functions in accordance with the selected devices, and determines a cooperative operation function which can be executed with only the device types of the selected devices that are currently connected to the serial bus 60.

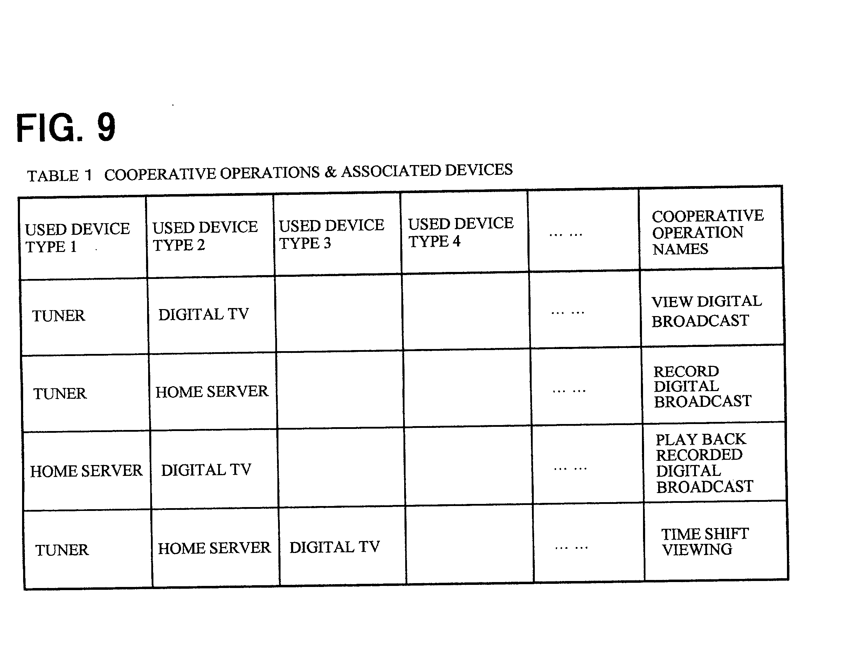

FIGURE 9 shows an example of such a table of cooperative operation functions. The table includes the names of cooperative operations which are made available by the use of the devices currently connected to the serial bus 60, and the device types obtainable from the devices in compliance with the AV/C Command Standard. When one or more of the devices are selected and the key "SEARCH" 165 on the screen 160 of FIGURE 3 is pressed by the user, the control unit 110 at Step 608 searches the table of FIGURE 9 and indicates a list 169 of cooperative operation names on the right side of a key "COOPERATIVE OPERTION FUNCTION" 167. In addition to the names of the currently available cooperative operations, the cooperative operation name list 169 may include cooperative operation names recorded in the history of cooperative operations used in the past as described later, regardless of the devices selected from the list 163.

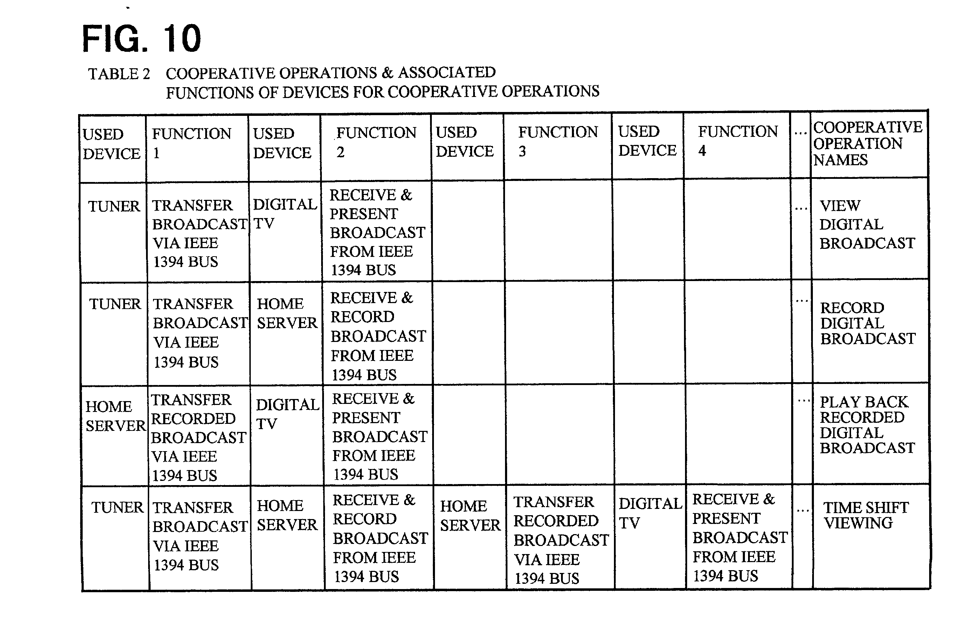

FIGURE 10 shows an example of another table related to the table of FIGURE 9. The table of FIGURE 10 includes the names of the cooperative operations, and functions that are provided by the respective devices when the cooperative operations are executed. In the case of "VIEW DIGITAL BROADCAST" for example, a tuner transfers broadcast video and audio data streams via the serial bus, and a digital television set receives the broadcast video and audio data streams from the serial bus and presents the picture and sound.

For example, when the user selects "TUNER" and "DTV1" and executes search on the screen 160 of FIGURE 3, the control unit 110 at Step 608 searches the table of FIGURE 9 and indicates "VIEW DIGITAL BROADCAST" in the list of cooperative operations, which are executable by using the selected devices, i.e. the tuner 400 and the television set 200.

One or more devices are selected from the device list 163 on the screen 160 at Step 604 in order to narrow down the number of cooperative operations to be extracted. If search is executed without selecting the devices from the device list 163, the control unit 110 assumes that all the devices indicated in the list 163 have been selected, and indicates, in the list 169, all of the cooperative operations that can be executed by the use of a few or all of the devices connected to the serial bus 60.

When one or more cooperative operations are indicated in the cooperative operation list 169 at Step 608, the user is allowed at Step 610 to select either one of the cooperative operations, for example with a radio button or the like.

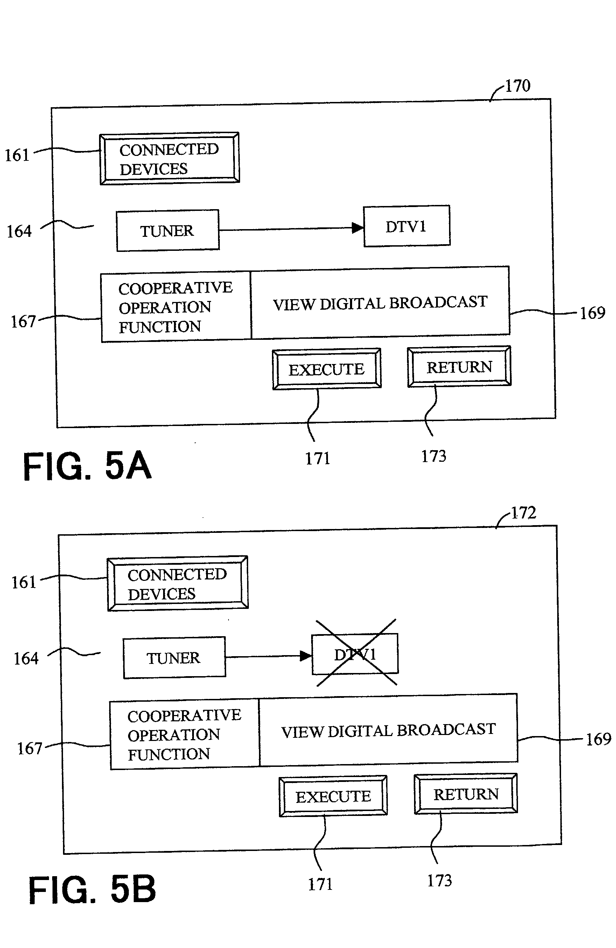

At Step 612 of FIGURE 4A, the control unit 110 determines whether one of the cooperative operations is selected by the user or not. If one cooperative operation is selected, the control unit 110 shows a screen for executing the cooperative operation at Step 616 of FIGURE 4B. FIGURE 5A illustrates a normal screen 170 for executing the cooperative operation as an example.

A device necessary for the cooperative operation may not be currently connected to the serial bus 60, when a cooperative operation used in the past is selected at Step 612, or when an electronic device connected to the serial bus 60 is changed at Step 616 by the user probably by mistake, in particular when it is disconnected. FIGURE 5B illustrates a screen 172 for executing the cooperative operation at Step 616, when the device necessary for the cooperative operation is not connected to the serial bus 60. On the screen 172, the necessary device (for example DTV1) that is not connected to the serial bus 60 is indicated with an indication " × ". After that, once the device necessary for the cooperative operation is connected to the serial bus 60 by the user, the screen 170 of FIGURE 5A is displayed.

The user can determine the execution of the cooperative operation by pressing a key "EXECUTION" 171 on the screen 170 of FIGURE 5A. At Step 618, the control unit 110 determines whether the execution of the cooperative operation is determined or not. If the execution of the cooperative operation is determined, the control unit 110 at Step 620 sends necessary control commands to the corresponding ones of the devices 20 to 40 via the serial bus 60 in a manner to actually execute the cooperative operation, while monitoring the statuses of the devices. The control unit 110 then completes the processing at Step 622.

If the execution of the cooperative operation is not determined during a predetermined period at Step 618, or if a key "RETURN" 173 on the screen 170 is pressed, the control unit 110 completes the processing at Step 622 without performing Step 620. If the key "RETURN" 173 on the screen 170 is pressed, the control unit 110 completes the processing at Step 622, and then the procedure returns to Step 602 and the control unit 110 displays the screen 160 of FIGURE 3 again.

If the cooperative operation is executed at Step 620, the control unit 110 records the name of the executed cooperative operation, the unique IDs and device types of the devices used in the execution of the current cooperative operation, and the time at which the cooperative operation is executed, in the storage device 150 for later use.

If it is determined at Step 612 that no cooperative operation is selected, the control unit 110 at Step 614 determines whether the devices 200 to 400 configured to the serial bus 60 are changed or not afterward (after Step 606). If it is determined at Step 614 that the devices configured to the serial bus 60 are changed, i.e., when it is determined that a device (for example either one of the devices 200 to 400) is connected to or disconnected from the serial bus 60, the procedure returns to Step 606, and the control unit 110 performs search for available cooperative operations again.

If it is determined at Step 614 that the configuration of the devices connected to the serial bus 60 is not changed, the procedure returns to Step 612 and the control unit 110 performs Step 612. Steps 612 and 614 are repeated until a cooperative operation is selected at Step 612 of FIGURE 4A. If no cooperative operation is selected during the repetition within a predetermined period, the procedure may proceed to Step 622 and the control unit 110 may complete the processing (not shown). Thus, available cooperative operations are indicated in real time, which allows the user to easily select a desired cooperative operation.

Next, an advantageous operation for selecting a cooperative operation used in the past to execute it again will be described below. For this purpose, in the embodiment, the home server 100 uses recorded data, such as the names of the cooperative operations used in the past or the like, that was recorded at Step 620 of FIGURE 4B.

As described above, the recorded cooperation names in the records of the cooperative operations used in the past may be indicated additionally in the cooperative operation list 169 on the screen 160 of FIGURE 3. The cooperative operation list 169 indicates, at the top, a cooperative operation function that was used most recently, and indicates, at lower positions, different cooperative operation functions that were used successively less recently. Alternatively, the cooperative operation used most frequently in the past may be indicated at the top. The cooperative operations may be indicated hierarchically in a tree structure.

The cooperative operation list 169 of FIGURE 3 is indicated by looking into the cooperative operation function table of FIGURE 9 and the records of cooperative operations used in the past. The cooperative operation list 169, i.e. the cooperative operations used in the past, may include an unavailable cooperative operation, when a device necessary for the cooperative operation selected by the user is not currently connected to the serial bus 60.

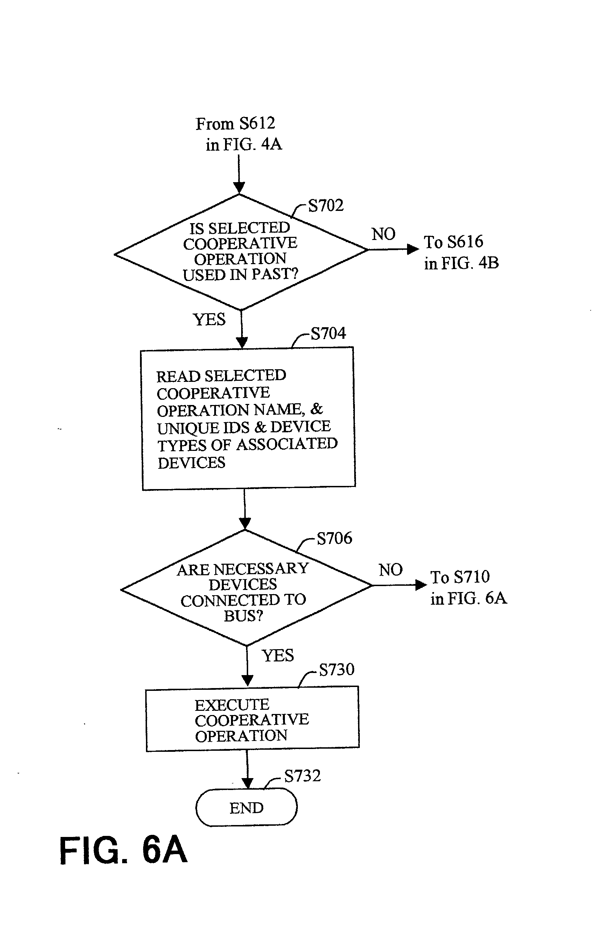

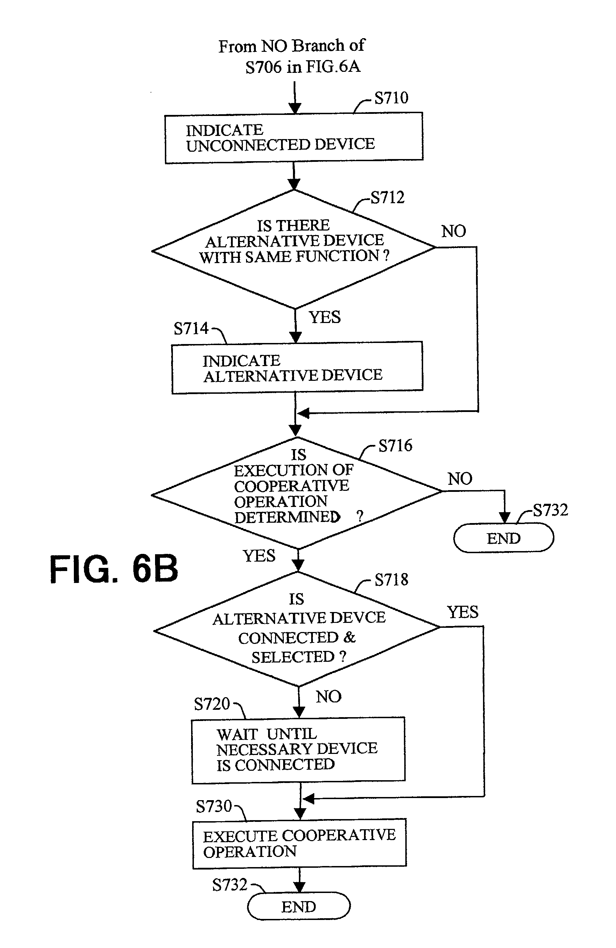

FIGURES 6A and 6B show a flow chart performed by the control unit 110, which can be added between Step 612 of FIGURE 4A and Step 616 of FIGURE 4B. At Step 702 of FIGURE 6A, the control unit 110 determines whether a cooperative operation used in the past is selected by the user or not. If it is determined that a cooperative operation used in the past is not selected, the procedure advances to Step 616 of FIGURE 4B.

If it is determined that a cooperative operation used in the past is selected, the control unit 110 at Step 704 reads the selected cooperative operation name, the unique IDs and device types of the devices associated with the cooperative operation. At Step 706, the control unit 110 determines whether necessary devices are connected to the serial bus 60 or not, by comparing the unique IDs of the devices in the records with the unique ID of the devices currently connected to the serial bus 60. If it is determined that the necessary devices are connected, the control unit 110 executes the cooperative operation at Step 730. After that, the control unit 110 completes the processing at Step 732.

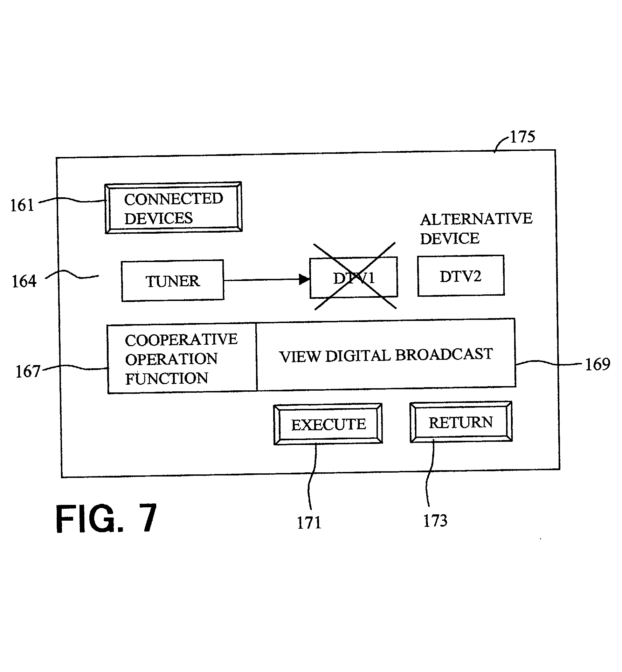

If it is determined at Step 706 that a necessary device is not connected, the procedure advances to Step 710 of FIGURE 6B, and the control unit 110 indicates the unconnected device on the display 122 as illustrated on the screen 175 of FIGURE 7 as an example. On the screen 175, the necessary device (for example DTV1) not connected to the serial bus 60 is indicated with the indication "×".

At Step 712, the control unit 110 determines whether a device having the same function as that of the unconnected necessary device is found or not in the devices connected to the serial bus 60. Whether a device has the same function as that of the unconnected necessary device or not can be determined from the device types that can be obtained from the devices in compliance with the AV/C Command Standard. If it is determined that such a device with the same function is connected, the control unit 110 at Step 714 indicates for example "DTV2" as an alternative or substitutable device as illustrated on the screen 175 of FIGURE 7, before the procedure advances to Step 716. If it is determined that such a device with the same function is not connected, the procedure directly advances to Step 716.

Next, the user may select the alternative device indicated on the screen 175 and determine the execution of the cooperative operation. At Step 716, the control unit 110 determines whether the execution of the cooperative operation is determined or not. If the execution of the cooperation is not determined during a predetermined period at Step 716, the control unit 110 completes the processing at Step 732. If it is determined that the execution of the cooperative operation is determined at Step 716, the procedure advances to Step 718.

At Step 718, the control unit 110 determines whether an alternative device is found and also the use of the alternative device is selected by the user or not. If it is determined that an alternative device is found and the use of the alternative device is selected by the user, the control unit 110 executes the cooperative operation at Step 730. If no alternative device is found, or if an alternative device is found but the use of the alternative device is not selected by the user, then the control unit 110 waits at Step 720 until the necessary device is connected to the serial bus 60. If the necessary device is connected to the serial bus 60, the control unit 110 executes the cooperative operation at Step 730. After that, the control unit 110 completes the processing at Step 732.

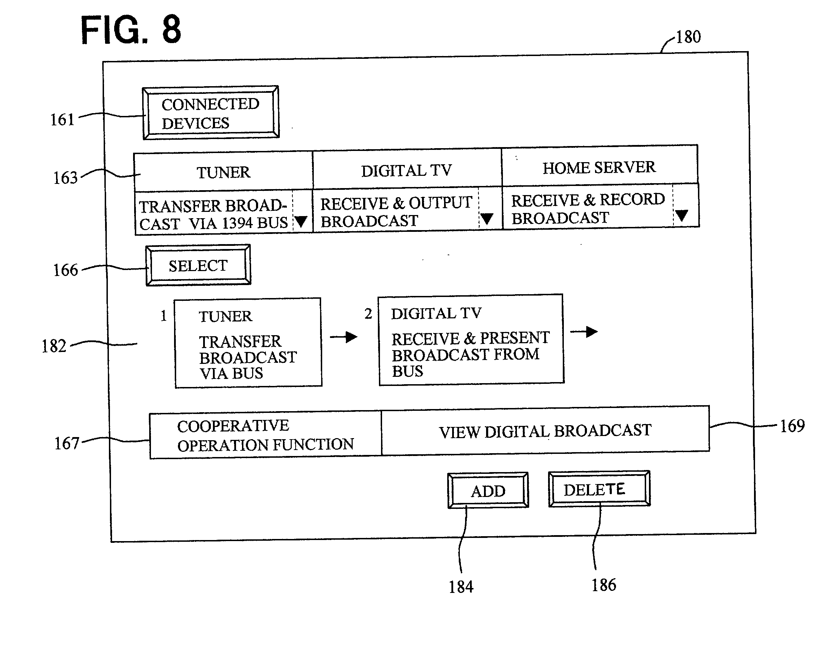

Next, a method for renewing the cooperative operation tables shown in FIGURES 9 and 10 as examples will be described below. First, how the user renews the tables will be described. FIGURE 8 illustrates a renewal screen 180 displayed on the display 122. The screen 180 displays the list 163 of the devices currently connected to the serial bus 60. Next, the available functions of the devices are indicated below the respective device names in the list 163. The available functions of the devices can be determined by means of the command sets defined in the AV/C Command Standard.

In order to add a cooperative operation to the tables of FIGURES 9 and 10, the user selects the combinations of devices to be used and respective used functions in the order of the execution of the functions, inputs a cooperative operation name in the field 169 of the cooperative operation function and finally presses a key "ADD" 184 on the screen 180. In order to delete a cooperative operation from the tables of FIGURES 9 and 10, the user selects a cooperative operation to be deleted from the list of the cooperative operations indicated in the cooperative operation field 169 and presses a key "DELETE" 186 on the screen 180. The control unit 110 renews the tables of FIGURES 9 and 10 in accordance with the addition and deletion determined by the user.

Alternatively, the home server 100 may receive a cooperative operation table from a Web site via a network (not shown), such as the Internet, connected to the home server 100, and renew the cooperative operation table of the home server 100 with the received table. Alternatively, the devices may hold respective portions of data for the cooperation table, and when the device is connected to or disconnected from the serial bus 60, the cooperative operation table of the home server 100 may be renewed by downloading the cooperation table data portions of the devices to the home server 100

The above-described embodiment is only a typical example, and its modifications and variations are apparent to people skilled in the art. It should be noted that people skilled in the art can make various modifications to the above-described embodiment without departing from the principle of the invention and the accompanying claims.

### Advantages of the Invention

According to the invention, advantageously, the user can more easily use a cooperative operation function for the plurality of the devices connected to the LAN, and a device required to be connected to the LAN in order to execute a particular cooperative operation function can be indicated.

## Claims

1. An information processing device for enabling devices connected to a local area network to operate cooperatively, said information processing device comprising a control unit, a memory, and a transceiver unit connected to said local area network,
said control unit generating, in accordance with selection of one or more of said devices by a user, data representative of one or more cooperative operations executable by using said selected one or more devices, and
said control unit providing to said one or more selected devices, via said local area network, a necessary command to execute one of said one or more executable cooperative operations that is selected by said user.

2. An information processing device according to claim 1, wherein said control unit stores a record of said executed cooperative operation in said memory.

3. An information processing device according to claim 1 or 2, wherein said control unit produces data representative of a cooperative operation executed in the past and recorded in said memory, independently of said selected one or more devices.

4. An information processing device according to claim 1, 2, or 3, wherein, when the devices configured to said local area network are changed, said control unit newly generates data representative of one or more cooperative operations executable by using said selected one or more devices in accordance with the devices currently connected to said local area network.

5. An information processing device according to any preceding claim, wherein, when a device necessary for said selected cooperative operation is not connected to said local area network, said control unit produces data representative of said necessary device.

6. An information processing device according to any preceding claim, wherein, when a device necessary for said selected cooperative operation is not connected to said local area network, said control unit executes said cooperative operation in response to subsequent connection of said necessary device to said local area network.

7. An information processing device according to any preceding claim, wherein said control unit determines said one or more executable cooperative operations by looking up a table including cooperative operations and associated devices.

8. An information processing device according to any preceding claim, wherein said control unit determines a device required to be connected to said local area network in order to execute said selected cooperative operation which was used in the past, by comparing devices associated with said selected cooperative operation used in the past with the devices currently connected to said local area network.

9. An information processing device comprising a control unit, a memory, and a transceiver unit connected to a local area network,
said control unit generating data representative of one or more cooperative operations executed in the past and recorded in said memory, and
said control unit providing a necessary command to execute one of said one or more cooperative operations that is selected by a user, to one or more devices associated with said selected cooperative operation via said local area network.

10. An information processing device according to claim 9, wherein said control unit determines a device required to be connected to said local area network in order to execute again said cooperative operation executed in the past, by comparing devices associated with said selected cooperative operation with the devices currently connected to said local area network.

11. An information processing device according to claim 9 or 10, wherein, when a device necessary for said selected cooperative operation is not connected to said local area network, said control unit generates data representative of said necessary device.

12. An information processing device according to claim 9, 10, or 11, wherein, when a device necessary for said selected cooperative operation is not connected to said local area network, said control unit generates data representative of another device which is connected to said local area network and substitutable for said necessary device.

13. An information processing device according to claim 9, 10, 11, or 12, wherein, when a device necessary for said selected cooperative operation is not connected to said local area network, said control unit executes said cooperative operation in response to subsequent connection of said necessary device to said local area network.

14. An information processing device comprising a control unit, a memory, and a transceiver unit connected to a local area network,
said control unit generating data representative of one or more cooperative operations, and when a device necessary for executing one of said one or more cooperative operations that is selected by a user is not connected to said local area network, said control unit producing data representative of another device which is connected to said local area network and substitutable for said necessary device.

15. A program for use in an information processing device connected to a local area network, for enabling devices connected to said local area network to operate cooperatively, said program operable to effect the steps of:
generating, in accordance with selection of one or more of said devices by a user, data representative of one or more cooperative operations executable by using said selected one or more devices; and
providing to said one or more selected devices, via said local area network, a necessary command to execute one of said one or more executable cooperative operations that is selected by said user.

16. A program according to claim 15, operable to further effect the step of storing a record of said executed cooperative operation in a memory.

17. A program according to claim 15 or 16, operable to further effect the step of newly generating data representative of one or more cooperative operations executable by using said selected one or more devices in accordance with the devices currently connected to said local area network, when the devices configured to said local area network are changed.

18. A program for use in an information processing device connected to a local area network, said program operable to effect the steps of:
generating data representative of one or more cooperative operations executed in the past and recorded in a memory; and
providing a necessary command to execute one of said one or more cooperative operations that is selected by a user, to one or more devices associated with said selected cooperative operation via said local area network.

19. A program according to claim 18, operable to further effect the step of determining a device required to be connected to said local area network in order to execute again said cooperative operation executed in the past, by comparing devices associated with said selected cooperative operation with the devices currently connected to said local area network.

20. A program according to claim 18 or 19 operable to further effect the step of generating data representative of a device necessary for said selected cooperative operation, when said necessary device is not connected to said local area network.

21. A program according to claim 18, 19, or 20, operable to further effect the step of generating data representative of a device which is connected to said local area network and substitutable for a device necessary for executing said selected cooperative operation, when said necessary device is not connected to said local area network.

22. A program for use in an information processing device connected to a local area network, said program operable to effect the steps of:
generating data representative of one or more cooperative operations; and
producing data representative of a device which is connected to said local area network and substitutable for a device necessary for executing one of said one or more cooperative operations that is selected by a user, when said necessary device is not connected to said local area network.
